# EUROPÄISCHE PATENTSCHRIFT

(11) **EP 4 179 192 B1**
(45) Veröffentlichungstag und Bekanntmachung des Hinweises auf die Patenterteilung: **14.02.2024**
(21) Anmeldenummer: 21755891.5
(22) Anmeldetag: 13.07.2021
(51) Int. Cl.: F02K 1/60, F02K 1/72, B29C 64/00

(54) **KASKADENELEMENT FÜR EIN SCHUBUMKEHRSYSTEM EINES TRIEBWERKS**
CASCADE ELEMENT FOR A THRUST REVERSER SYSTEM OF AN ENGINE
ÉLÉMENT EN CASCADE POUR SYSTÈME D'INVERSION DE POUSSÉE DE MOTEUR

(30) Priorität: 13.07.2020 AT 506052020
(43) Veröffentlichungstag der Anmeldung: 17.05.2023
(73) Patentinhaber: FACC AG, 4910 Ried im Innkreis (AT)
(72) Erfinder: LORETZ, Ludwig, 2000 Stockerau (AT); HÖLLRIGL, Andreas, 1230 Wien (AT); NELBÖCK, Günter, 4863 Seewalchen (AT)
(74) Vertreter: SONN Patentanwälte GmbH & Co KG
(86) Internationale Anmeldenummer: PCT/AT2021/060248
(87) Internationale Veröffentlichungsnummer: WO 2022/011407

(56) Entgegenhaltungen:
- EP-A1- 2 949 910
- EP-A2- 3 597 543
- US-A1- 2017 057 166

## Beschreibung

Die Erfindung betrifft ein Kaskadenelement für ein Schubumkehrsystem eines Triebwerks, insbesondere eines Strahltriebwerks, aufweisend eine Anzahl von nebeneinander angeordneten Umlenkschaufeln zur Umlenkung eines Luftstroms. Weiters betrifft die Erfindung ein Triebwerk mit einem Schubumkehrsystem. Zuletzt betrifft die Erfindung ein Verfahren zur Herstellung eines Kaskadenelements für ein Schubumkehrsystem eines Triebwerks, insbesondere eines Strahltriebwerks.

Ein Triebwerk mit einem Schubumkehrsystem ist beispielsweise aus der US 2017/0057166 A1, der EP 2 949 910 A1 und der EP 3 597 543 A2 bekannt.

Mit Schubumkehrsystemen kann der Luftstrom eines Triebwerks entgegen der Schubrichtung für die Vorwärtsbewegung des Flugzeugs umgelenkt werden, um das Flugzeug nach dem Aufsetzen auf der Landebahn effektiv abzubremsen. Hierdurch werden eine Verkürzung der Landerollstrecke und eine Entlastung der Radbremsen beim Landen von Flugzeugen erreicht.

Das mit dem Schubumkehrsystem ausgestattete Triebwerk kann ein Einstrom-Strahltriebwerk ("Turbojet") oder ein Mantelstromtriebwerk ("Turbofan") sein. Zur Aktivierung der Schubumkehr wird üblicherweise eine Schubumkehrklappe in den Antriebsluftstrom (beispielsweise in den Mantel-/Nebenstrom im Fall eines Mantelstromtriebwerks) eingebracht. Mit dieser Schubumkehrklappe wird der übliche Pfad des Antriebsluftstroms zumindest teilweise verschlossen und der Luftstrom beispielsweise um etwa 90° umgelenkt, so dass der Luftstrom anschließend im Wesentlichen radial bezogen auf die Längsachse des Triebwerks verläuft. Durch die Verlagerung der Schubumkehrklappe kann gleichzeitig eine im Wesentlichen umfangseitig verlaufende und einen Ring bildende Anzahl von Kaskadenelementen freigegeben werden. Diese Kaskadenelemente weisen jeweils eine Kaskade von nebeneinander angeordneten Umlenkschaufeln auf, mit denen die Richtung des Luftstroms weiter umgelenkt wird. Auf diese Weise kann der Luftstrom eine Komponente in Vorwärts-Axialrichtung (d.h. in die dem Austrittsluftstrom für den Flugbetrieb entgegengesetzte Richtung) erhalten. Mit den Kaskadenelementen wird auch der effektive Flächenverlust minimiert und der Umkehrschub maximiert.

Ein Triebwerk kann beispielsweise 32 Kaskadenelemente aufweisen. Jedes Kaskadenelement muss individuell gefertigt werden, weshalb hohe Fertigungsmittelkosten entstehen. Beim Stand der Technik werden die Kaskadenelemente aus Metall gefräst oder in Handarbeit aufgelegt. Weiters ist eine Fertigung im Spritzgussverfahren oder mit Gesenkschmieden möglich. Bei einer Herstellung mit Autoklavformen wird eine Karbonfaserstruktur in ein Formwerkzeug eingebracht. In die Karbonfaserstruktur reichen flexible Dorne, die offene Umlenkkanäle der Umlenkschaufeln definieren. Das Einlegen geschieht üblicherweise per Hand und ist sehr arbeitsintensiv. Je nach Ausführung kann das Formenwerkzeug geschlossen und ein Ober- und ein Unterteil des Formenwerkzeugs aufeinander zu bewegt werden, um einen Konsolidierungsdruck auf die Faserstruktur auszuüben, oder die Faserstruktur wird im Formenwerkzeug vakuumisiert eingeschlossen und in einem Autoklav unter Druck ausgehärtet. Nach dem Formen müssen die flexiblen Dorne entfernt werden. Dieser Prozess ist wiederum sehr teuer und schwierig.

Bei bekannten Schubumkehrsystemen tritt das Problem auf, dass der umgelenkte Vortriebsstrahl in Richtung des Einlassbereichs des Triebwerks geblasen werden kann. Dadurch können Fremdkörper auf der Landebahn aufgewirbelt und vom Triebwerk angesaugt werden. Dies kann zu Beschädigungen am Triebwerk führen. Um diese Nachteile zu vermindern, können bei bekannten Schubumkehrsystemen an bestimmten Abschnitten an der Mantelfläche des Triebwerks Kaskadenelemente mit schräg gestellten Umlenkschaufeln vorgesehen sein, deren Längsachsen einen von 90° abweichenden Winkel zu einer Längsachse des Triebwerks einschließen, um den Umkehrluftstrom vom Boden und/oder von den Tragflächen wegzuleiten. Damit ist allerdings nur eine sehr unpräzise Lenkung des Umkehrluftstroms möglich, da die Umlenkschaufeln eines Kaskadenelements beim Stand der Technik überall dieselbe Schrägstellung aufweisen. Eine solche Ausführung könnte weiters die Turbulenz erhöhen. Auch die Umkehrschubleistung könnte vermindert werden.

Die Aufgabe der vorliegenden Erfindung besteht darin, zumindest einzelne Nachteile des Standes der Technik zu lindern bzw. zu beheben. Die Erfindung setzt sich insbesondere zum Ziel, ein Kaskadenelement und ein Triebwerk mit einem Schubumkehrsystem vorzuschlagen, mit dem die Umkehrschubleistung erhöht und/oder eine präzisere Lenkung des Umkehrluftstroms ermöglicht werden soll. Weiters ist es insbesondere eine Aufgabe der vorliegenden Erfindung, ein einfaches Herstellungsverfahren für ein solches Kaskadenelement bereitzustellen.

Diese Aufgabe wird durch ein Kaskadenelement mit den Merkmalen von Anspruch 1, ein Triebwerk mit den Merkmalen von Anspruch 10 und ein Verfahren mit den Merkmalen von Anspruch 12 gelöst. Bevorzugte Ausführungsformen sind in den abhängigen Ansprüchen angegeben.

Erfindungsgemäß ist zumindest eine der Umlenkschaufeln des Kaskadenelements zumindest entlang eines Verwindungs-Längsabschnitts um ihre Längsachse verwunden.

Durch die Verwindung der Umlenkschaufel an einem Längsabschnitt der Umlenkschaufel ist es möglich, die Luftströmung präziser umzulenken und insbesondere die Luft entlang der Längserstreckung der Umlenkschaufel unterschiedlich abzulenken. Weiters ist es vorteilhafterweise möglich, durch die Verwindung den Luftstrom von benachbarten Kaskadenelementen oder eines Kaskadenelements zu bündeln. Bei Verwendung in einem Schubumkehrsystem eines Flugzeugtriebwerks kann die Luft effektiv vom Boden und/oder den Tragflächen abgelenkt werden.

Am Verwindungs-Längsabschnitt dieser Umlenkschaufel sind zumindest zwei Längslinien vorhanden, die zueinander windschief (d.h. nicht parallelverschoben) sind. Dabei verläuft die erste der Längslinien durch zwei erste Punkte und die zweite der Längslinien durch zwei zweite Punkte, wobei die zwei zweiten Punkte jeweils um denselben Vektor gegenüber jeweils einem der zwei ersten Punkte (vorzugsweise in Tiefenerstreckungsrichtung der Umlenkschaufel) verschoben sind. Für diese Definition wird die Wandstärke (Dicke) der Umlenkschaufel vernachlässigt und die Punkte werden insbesondere jeweils bei halber Wandstärke festgelegt. Weiters wird für die Bedingung der Parallelität eine (üblicherweise geringe) Krümmung zur Anpassung an den Umfang einer Triebwerksgondel, d.h. eine Krümmung um die Beabstandungsrichtung, nicht berücksichtigt. Die Umlenkschaufeln erstrecken sich in Längsrichtung im Wesentlichen normal zu einer Beabstandungsrichtung der Umlenkschaufeln zueinander. Der Verwindungs- bzw. Verdrillungswinkel liegt bevorzugt zwischen 0° und 50°, besonders bevorzugt zwischen 2° und 30°, noch mehr bevorzugt zwischen 3° und 20. Der Verwindungs- bzw. Verdrillungswinkel wird definiert über zwei äußerste (d.h. in Tiefenerstreckungsrichtung am weitesten entfernte, insbesondere oberste und unterste) Längslinien wie oben definiert.

Die Verwindung ist vorzugsweise über einen Abschnitt kontinuierlich. Die Umlenkschaufel kann zwei oder mehr unterschiedliche Verwindungen in verschiedenen Längsabschnitten aufweisen. Bevorzugt weist mehr als eine Umlenkschaufel des Kaskadenelements die Verwindung auf, besonders bevorzugt weisen alle Umlenkschaufeln des Kaskadenelements jeweils eine Verwindung auf, insbesondere in dieselbe Verwindungsrichtung.

Das Kaskadenelement weist die Anzahl von nebeneinander angeordneten Umlenkschaufeln vorzugsweise in Form von Lamellen auf. Das Kaskadenelement weist bevorzugt zwischen 5 und 200, besonders bevorzugt zwischen 30 und 60 Umlenkschaufeln, auf. Die Umlenkschaufeln weisen bevorzugt jeweils eine größere Längserstreckung als Tiefenerstreckung auf. Die Längsachse verläuft im Wesentlichen in Längserstreckungsrichtung der Umlenkschaufeln. Die Längserstreckungsrichtung wird durch eine mittlere Längserstreckungsrichtung definiert. Die Tiefenerstreckung der Umlenkschaufeln beträgt bevorzugt zumindest 1 cm, insbesondere zwischen 2 und 15 cm, besonders bevorzugt zwischen 3 und 12 cm, noch mehr bevorzugt zwischen 5 und 8 cm. Die Längserstreckung der Umlenkschaufeln beträgt bevorzugt zumindest 2 cm, insbesondere zwischen 3 und 20 cm, besonders bevorzugt zwischen 4 und 15 cm, noch mehr bevorzugt zwischen 6 und 10 cm. Die Wandstärke der Umlenkschaufeln beträgt vorzugsweise zwischen 0,5 und 15 mm, bevorzugt zwischen 1 und 7 mm, besonders bevorzugt zwischen 1,5 und 6 mm, noch mehr bevorzugt zwischen 2 und 5 mm. Vorzugsweise weisen mehrere oder alle Umlenkschaufeln eines Kaskadenelements die gleiche Verwindung oder zumindest eine Verwindung in die gleiche Richtung (jedoch ggf. um unterschiedliche Winkel) auf.

Das erfindungsgemäße Triebwerk weist zumindest ein erfindungsgemäßes Kaskadenelement auf. Vorteilhafterweise weist das Triebwerk mehrere erfindungsgemäße Kaskadenelemente auf. Das Triebwerk kann zumindest ein erfindungsgemäßes Kaskadenelement und zumindest ein konventionelles Kaskadenelement (d.h. ohne Verwindung der Umlenkschaufeln) aufweisen.

In der bestimmungsgemäßen Platzierung des Kaskadenelements im Schubumkehrsystem eines Triebwerks verläuft die Längserstreckung und/oder Längsachse des Kaskadenelements insbesondere in Umfangsrichtung bezogen auf die Längsachse des Triebwerks, d.h. die Triebwerksachse. Die Beabstandungsrichtung der Kaskadenelemente verläuft insbesondere im Wesentlichen in axialer Richtung des Triebwerks bzw. der Triebwerksgondel.

Das erfindungsgemäße Verfahren zur Herstellung eines Kaskadenelements für ein Schubumkehrsystem eines Triebwerks, insbesondere eines Strahltriebwerks, weist zumindest den Schritt auf:
- additive Herstellung einer Anzahl von nebeneinander angeordneten Umlenkschaufeln zur Umlenkung eines Luftstroms, wobei zumindest eine der Umlenkschaufeln entlang eines Längsabschnitts mit einer Verwindung bezüglich ihrer Längsachse ausgebildet wird.

Mit diesem Verfahren kann das oben beschriebene Kaskadenelement auf besonders einfache Weise hergestellt werden. Die additive Herstellung wird vorzugsweise mittels 3D-Druck durchgeführt. Als Material zur additiven Herstellung wird vorzugsweise (zumindest ein) faserverstärkter Kunststoff, insbesondere thermoplastischer oder duroplastischer Kunststoff, bevorzugt GFK oder CFK, oder (zumindest ein) Metall verwendet.

Bezugnehmend auf das erfindungsgemäße Kaskadenelement ist es vorteilhaft, wenn die nebeneinander angeordneten Umlenkschaufeln durch zumindest zwei Stützwände miteinander verbunden sind, wobei jeweils zwei benachbarte Umlenkschaufeln und zwei Stützwände einen Fluidstrom-Umlenkkanal bilden. Es sind bevorzugt zumindest 2 Stützwände vorgesehen. Bei einer bevorzugten Ausführung sind zwischen 1 und 30 Stützwände, besonders bevorzugt zwischen 3 und 6 Stützwände, vorgesehen. Es wird somit eine Vielzahl an Fluidstrom-Umlenkkanälen gebildet. Die Stützwände können die Stabilität des Kaskadenelements erhöhen und auch die Umlenkung des Luftstroms verbessern. Die Stützwände erstrecken sich im Wesentlichen parallel zur Beabstandungsrichtung der Umlenkschaufeln voneinander, d.h. die Längserstreckungsrichtung der Umlenkschaufeln ist annähernd bzw. im Wesentlichen normal zur Längserstreckungsrichtung der Stützwände. Die Stützwände sind vorzugsweise flach und/oder eben. Es ist besonders vorteilhaft, wenn die Stützwände auch zur Strömungsleitung verwendet werden. Um dies zu erreichen, kann zumindest eine Stützwand eine Längserstreckungsrichtung aufweisen, die von der Beabstandungsrichtung bzw. der axialen Richtung eines Triebwerks abweicht und insbesondere einen Winkel von zumindest 2°, vorzugsweise zumindest 5°, mit der Beabstandungsrichtung bzw. der axialen Richtung des Triebwerks einschließt. Weiters ist es bevorzugt, wenn zumindest eine Stützwand zumindest entlang eines Verwindungs-Längsabschnitts um ihre Längsachse verwunden ist. Für die Verwindung der Stützwand können dieselben bevorzugten Merkmale vorliegen wie für die Verwindung der Umlenkschaufel. Vorzugsweise ist der Abstand zwischen zwei benachbarten Stützwänden eines Kaskadenelements mehr als 1 mal so groß, bevorzugt 1,5 mal so groß, besonders bevorzugt mehr als doppelt so groß, wie der Abstand zwischen zwei benachbarten Umlenkschaufeln. Bezogen auf die bestimmungsgemäße Platzierung des Kaskadenelements im Schubumkehrsystem eines Triebwerks erstrecken sich die Stützwände vorzugsweise entlang der Längserstreckungsrichtung, d.h. in axialer Richtung, des Triebwerks.

Es ist vorteilhaft, wenn die Umlenkschaufeln bezüglich einer Achse, die definiert wird durch eine Beabstandungsrichtung der Anzahl von Umlenkschaufeln voneinander (bzw. der Längsachse der Triebwerksgondel) zur Anpassung an eine Mantelfläche einer Triebwerksgondel gekrümmt sind. Somit kann eine Anzahl an Kaskadenelementen umfänglich verlaufend im Schubumkehrsystem des Triebwerks vorgesehen sein. Der Krümmungsradius bezüglich einer zur Beabstandungsrichtung parallelen Achse beträgt bevorzugt zwischen 0,5 und 2,5 m, besonders bevorzugt zwischen 0,6 und 2 m, noch mehr bevorzugt zwischen 0,75 und 1,75 m. Die Beabstandungsrichtung der Anzahl von Umlenkschaufeln voneinander entspricht insbesondere der Längserstreckungsrichtung bzw. axialen Richtung des Triebwerks bzw. der Längserstreckungsrichtung der Stützwände.

In einer bevorzugten Ausführungsform weist zumindest eine Umlenkschaufel einen gekrümmten Querschnitt, insbesondere im Querschnitt normal zur Längs- und Tiefenerstreckungsrichtung der Umlenkschaufel (d.h. normal zur Oberfläche der Umlenkschaufel), auf. Hierdurch kann eine Luftströmung weiter umgelenkt werden und die Luftströmung insbesondere mit einer Geschwindigkeitskomponente in die entgegengesetzte Richtung einer ins Triebwerk einströmenden Luftströmung versehen werden. Vorzugsweise weisen alle der Anzahl an Umlenkschaufeln eines Kaskadenelements einen gekrümmten Querschnitt auf. Die Krümmung des Querschnitts weist einen Krümmungsradius von bevorzugt zumindest 1 cm, besonders bevorzugt zumindest 2 cm, noch mehr bevorzugt zwischen 3 und 15 cm, noch mehr bevorzugt zwischen 5 und 10 cm, auf.

Es ist bevorzugt, wenn zumindest eine Umlenkschaufel an einer die Umlenkschaufel in Tiefenerstreckungsrichtung begrenzenden Kante (d.h. an einer in radialer Richtung des Triebwerks gesehen äußeren Kante) eine Ausbuchtung aufweist, sodass der Verlauf der Kante von einer Geraden bzw. in dem Verwindungs-Längsabschnitt von einer Helix abweicht.

Diese Ausführung kann bei einem Kaskadenelement wie oben beschrieben, aber auch bei einem Kaskadenelement ohne Verwindung der Umlenkschaufeln vorgesehen sein. Demnach bezieht sich die Erfindung allgemein auch auf ein Kaskadenelement für ein Schubumkehrsystem eines Triebwerks, insbesondere eines Strahltriebwerks, aufweisend eine Anzahl von nebeneinander angeordneten Umlenkschaufeln zur Umlenkung eines Luftstroms, wobei zumindest eine Umlenkschaufel an einer die Umlenkschaufel in Tiefenerstreckungsrichtung begrenzenden Kante (d.h. an einer in radialer Richtung des Triebwerks gesehen äußeren Kante) eine Ausbuchtung aufweist.

Die Kanten der Umlenkschaufeln auf einer Seite liegen vorzugsweise im Wesentlichen in einer Ebene. Im Bereich der Ausbuchtung ragt die Umlenkschaufel über die von den Kanten der Umlenkschaufeln (in den übrigen Bereich ohne Ausbuchtung) definierte Ebene hinaus. Die Ausbuchtung kann symmetrisch oder asymmetrisch bezogen auf eine sich in Tiefenerstreckungsrichtung der Umlenkschaufel erstreckende Achse ausgebildet sein. Mit der Ausbuchtung kann der Luftstrom gebündelt werden und seine Richtung geändert werden, während die Umlenkschaufel ansonsten eine geringere Tiefenerstreckung aufweisen können. Die Form der Ausbuchtung kann in alle Richtungen variabel gestaltet werden.

In einer bevorzugten Ausführungsform ist die zumindest eine Umlenkschaufel im Bereich der Ausbuchtung konkav (betrachtet aus der Richtung des Schub-Luftstroms vor Umlenkung desselben durch die Umlenkschaufeln), insbesondere als Teilschale, ausgebildet. Hierdurch kann ein Luftstrom besonders gut gebündelt und gleichzeitig umgelenkt werden.

Es ist vorteilhaft, wenn die Umlenkschaufel derart ausgebildet ist, dass eine an der Umlenkschaufel vorbeiströmende Fluidströmung in Richtung einer zentralen Linie der Ausbuchtung umgelenkt wird. Hierdurch kann die Wirkung der Schubumkehr verbessert werden.

In einer vorteilhaften Ausführungsform ist an zumindest einer Umlenkschaufel (an zumindest einer der beiden Seiten bzw. Oberflächen der Umlenkschaufel) zumindest eine Leitrippe vorgesehen.

Diese Ausführung kann bei einem Kaskadenelement wie oben beschrieben, aber auch bei einem Kaskadenelement ohne Verwindung der Umlenkschaufeln vorgesehen sein. Demnach bezieht sich die Erfindung allgemein auch auf ein Kaskadenelement für ein Schubumkehrsystem eines Triebwerks, insbesondere eines Strahltriebwerks, aufweisend eine Anzahl von nebeneinander angeordneten Umlenkschaufeln zur Umlenkung eines Luftstroms, wobei an zumindest einer Umlenkschaufel zumindest eine Leitrippe vorgesehen ist.

Die Leitrippe verläuft vorzugsweise in einem Winkel zwischen - 45° und +45°, bevorzugt zwischen -30° und +30°, zur Tiefenerstreckungsrichtung der Umlenkschaufeln, insbesondere in Tiefenerstreckungsrichtung der Umlenkschaufel. Die Leitrippe bildet insbesondere eine Ausbuchtung von der Oberfläche der Umlenkschaufeln. Vorteilhafterweise verläuft eine Leitrippe gleichermaßen (kongruent) auf beiden Seiten der Umlenkschaufel. Vorzugsweise weist zumindest eine Umlenkschaufel mehr als eine Leitrippe auf. Mit den Leitrippen kann eine aerodynamisch günstigere Lenkung der Luftströmung erzielt werden. Weiters kann die Leitrippe auch der Versteifung der Umlenkschaufel dienen und somit die Stabilität verbessern.

Es ist bevorzugt, wenn zumindest eine Umlenkschaufel eine sich in Tiefenerstreckungsrichtung verändernde Wandstärke aufweist. Vorzugsweise ist die Wandstärke in eine Orientierung der Tiefenerstreckungsrichtung, insbesondere in Richtung einer Luftstrom-Ausstoßrichtung eines Schubumkehrsystems, (monoton) abnehmend oder die Wandstärke ist von einer (insbesondere zentralen) Längslinie ausgehend in beide Orientierungen der Tiefenerstreckungsrichtung abnehmend. D.h., die Umlenkschaufel kann bspw. in der Mitte bezogen auf die Tiefenerstreckung eine größere Wandstärke aufweisen als am Rand. Hierdurch kann die Aerodynamik einer gelenkten Luftströmung verbessert werden. Weiters kann die Stabilität bei gleichem Gewicht verbessert und die Kosten können reduziert werden. Es ist auch möglich eine Lärmreduktion zu erzielen.

Bezugnehmend auf das erfindungsgemäße Triebwerk ist es vorteilhaft, wenn zwei Kaskadenelemente vorgesehen sind, die im Wesentlichen spiegelverkehrt angeordnet sind, sodass der von beiden Kaskadenelementen gelenkte Luftstrom zusammengeführt bzw. gebündelt werden kann. Es ist somit vorteilhaft, wenn das Schubumkehrsystem zumindest ein erstes und ein zweites Kaskadenelement wie hierin beschrieben aufweist (wobei das erste und das zweite Kaskadenelement in Umfangsrichtung bezogen auf eine Triebwerksachse vorzugsweise nebeneinander angeordnet sind), wobei zumindest eine der Umlenkschaufeln des ersten Kaskadenelements um eine Längsachse dieser Umlenkschaufel zumindest entlang des Verwindungs-Längsabschnitts in eine erste Winkelrichtung verwunden ist und zumindest eine der Umlenkschaufeln des zweiten Kaskadenelements um eine Längsachse dieser Umlenkschaufel zumindest entlang des Verwindungs-Längsabschnitts in eine der ersten Winkelrichtung entgegengesetzten zweite Winkelrichtung verwunden ist. Somit weist jeweils zumindest eine Umlenkschaufel der beiden Kaskadenelemente eine entgegengesetzte Verwindung auf. Die Längsachsen der Verwindung der beiden Kaskadenelemente sind vorzugsweise im Wesentlichen symmetrisch bezogen auf eine durch eine Mittelachse des Triebwerks verlaufende Ebene.

Bezugnehmend auf das erfindungsgemäße Verfahren ist es vorteilhaft, wenn der Schritt der additiven Herstellung der Anzahl von nebeneinander angeordneten Umlenkschaufeln weiters das Versehen zumindest einer der Umlenkschaufeln an zumindest einem Seitenflächenabschnitt mit einer Riblet-Oberfläche (Haifisch-Schuppen-Oberfläche) umfasst. Hierdurch kann die Strömungsführung verbessert werden und der Strömungswiderstand reduziert werden. Es kann auch eine Lärmreduktion erzielt werden. Das bedeutet insbesondere, dass an dem Seitenflächenabschnitt eine Vielzahl an Rippen vorgesehen ist, deren Längsachse insbesondere in Strömungsrichtung liegt und die insbesondere eine Dreiecksform aufweisen. Diese verlaufen in Strömungsrichtung einer umzulenkenden Luftströmung. Es sind bevorzugt zumindest 20, besonders bevorzugt zumindest 50, noch mehr bevorzugt zumindest 200 Rippen vorgesehen. Die Rippen weisen insbesondere eine spitze Abschlusskante auf; die Spitze weist vorzugsweise einen spitzen Winkel von bevorzugt weniger als 60°, besonders bevorzugt weniger 50°, noch mehr bevorzugt weniger als 40°, auf. Bevorzugt beträgt der Abstand zwischen den Spitzen zweier benachbarter Rippen weniger als 1 mm, besonders bevorzugt weniger als 0,2 mm, noch mehr bevorzugt weniger als 0,1 mm. Es ist besonders bevorzugt, wenn die Riblet-Oberfläche in einem zusätzlichen Fertigungsschritt, insbesondere in Form einer Folie oder einer Lackierung, aufgebracht wird.

Bei der additiven Herstellung wird vorzugsweise ein Filament verwendet, das einen Duroplast und/oder einen Thermoplast aufweist. Bevorzugt erfolgt eine Gewebeverstärkung mit einer Endlos-Kohlenstoff- und/oder -Glasfaser. Vorzugsweise wird ein Kaskadenelement in einer der Ausführungsformen wie hierin beschrieben hergestellt. Die Umlenkschaufeln könnten auch aus einem metallischen Grundwerkstoff additiv hergestellt werden.

In einer vorteilhaften Variante umfasst das Verfahren weiters den Schritt: additive Herstellung von zumindest zwei Stützwänden, mit denen nebeneinander angeordnete Umlenkschaufeln miteinander verbunden werden, wobei jeweils zwei benachbarte Umlenkschaufeln und zwei Stützwände einen Fluidstrom-Umlenkkanal bilden. Hierdurch kann die Stabilität und die Luftlenkung verbessert werden.

Es ist vorteilhaft, wenn die additive Herstellung der Anzahl von nebeneinander angeordneten Umlenkschaufeln und die additive Herstellung von zumindest zwei Stützwänden mit zumindest einem ersten und einem zweiten Druckkopf erfolgt, wobei mit dem ersten Druckkopf zumindest eine Stützwand und eine Umlenkschaufel, die einen bestimmten Fluidstrom-Umlenkkanal begrenzen, hergestellt wird, und mit dem zweiten Druckkopf zumindest eine weitere Stützwand und eine weitere Umlenkschaufel, die den bestimmten Fluidstrom-Umlenkkanal begrenzen, hergestellt wird, wobei zur additiven Herstellung verwendete Fasern des ersten Druckkopfs und des zweiten Druckkopfs zumindest an einem Eck des bestimmten Fluidstrom-Umlenkkanals verwebend gekreuzt geführt werden. Vorteilhafterweise wird in einem ersten Durchgang vom ersten und vom zweiten Druckkopf jeweils eine Schicht aufgetragen. In zumindest einem zweiten Durchgang wird jeweils eine weitere Schicht (insbesondere nach einem neuen Muster) aufgetragen, sodass zumindest eine, vorzugsweise jede, Umlenkschaufel und zumindest eine, vorzugsweise jede, Stützwand Schichten von dem ersten und dem zweiten Druckkopf enthält. Hierdurch können die Stabilität und Gleichmäßigkeit des Kaskadenelements verbessert werden. Durch den ersten und den zweiten Druckkopf wird das Filament (bspw. Thermoplast/Duroplast, insbesondere als Matrix) zusammen mit einer Endlosfaser zugeführt. Die Druckköpfe drehen sich vorzugsweise einmal um ihre gemeinsame Achse, um die verwebende Kreuzung zu bewirken.

Es ist vorteilhaft, wenn die Stützwand, die Umlenkschaufel, die weitere Stützwand und die weitere Umlenkschaufel, die den bestimmten Fluidstrom-Umlenkkanal begrenzen, jeweils zwei Schichten aufweisen, wobei die Herstellung einer der zwei Schichten mit dem ersten Druckkopf erfolgt und die Herstellung der anderen der zwei Schichten mit dem zweiten Druckkopf erfolgt.

Vorzugsweise wird zuerst ein Rahmen hergestellt (bspw. mittels Thermoplast-AFP), und anschließend erfolgt die additive Fertigung der Umlenkschaufeln. Es kann auch ein Rahmen mit einem Thermoplast gepresst werden und die Umlenkschaufeln direkt auf den Rahmen aufgedruckt werden. Bei der additiven Herstellung besteht zusätzlich die Möglichkeit, eine spezielle Sensorik zu integrieren. Hiermit können Daten (bspw. zu Belastungen oder möglichen Optimierungen) gewonnen werden, weiters kann eine Überwachung der strukturellen Gesundheit erfolgen.

Die Erfindung eignet sich insbesondere für Schubumkehrsysteme von Flugzeugtriebwerken. Selbstverständlich ist sie auch bei anderen Triebwerken verwendbar.

Im Folgenden wird die Erfindung anhand von in den Figuren gezeigten bevorzugten Ausführungsformen näher erläutert.
Fig. 1 zeigt ein Triebwerk mit einem Schubumkehrsystem mit einer Anzahl an Kaskadenelementen.
Fig. 2 zeigt das Triebwerk der Fig. 1 mit dem Schubumkehrsystem im deaktivierten Zustand im Querschnitt.
Fig. 3 zeigt das Triebwerk der Fig. 1 mit dem Schubumkehrsystem im aktivierten Zustand im Querschnitt.
Fig. 4 zeigt das Triebwerk der Fig. 1 an einer Tragfläche, wobei die umgelenkte und gerichtete Luftströmung bei aktivierter Schubumkehr nach dem Austritt aus den Kaskadenelementen angedeutet ist.
Fig. 5A zeigt eine bevorzugte Ausführungsform des erfindungsgemäßen Kaskadenelements von innen.
Fig. 5B zeigt dasselbe Kaskadenelement wie Fig. 5A in einer isometrischen Ansicht von innen.
Fig. 5C zeigt dasselbe Kaskadenelement wie Fig. 5A in einer isometrischen Ansicht von außen.
Fig. 5D zeigt dasselbe Kaskadenelement wie Fig. 5A in einer ersten Schnittansicht.
Fig. 5E zeigt dasselbe Kaskadenelement wie Fig. 5A in einer zweiten Schnittansicht.
Fig. 5F zeigt dasselbe Kaskadenelement wie Fig. 5A in einer dritten Schnittansicht.
Fig. 5G zeigt dasselbe Kaskadenelement wie Fig. 5A in einer vierten Schnittansicht.
Fig. 6A zeigt eine weitere bevorzugte Ausführungsform des erfindungsgemäßen Kaskadenelements von innen.
Fig. 6B zeigt dasselbe Kaskadenelement wie Fig. 6A in einer isometrischen Ansicht von innen.
Fig. 6C zeigt dasselbe Kaskadenelement wie Fig. 6A in einer isometrischen Ansicht von außen.
Fig. 6D zeigt dasselbe Kaskadenelement wie Fig. 6A in einer ersten Schnittansicht.
Fig. 6E zeigt dasselbe Kaskadenelement wie Fig. 6A in einer zweiten Schnittansicht.
Fig. 6F zeigt dasselbe Kaskadenelement wie Fig. 6A in einer dritten Schnittansicht.
Fig. 6G zeigt dasselbe Kaskadenelement wie Fig. 6A in einer vierten Schnittansicht.
Fig. 7A zeigt eine weitere bevorzugte Ausführungsform des erfindungsgemäßen Kaskadenelements von innen.
Fig. 7B zeigt dasselbe Kaskadenelement wie Fig. 7A in einer isometrischen Ansicht von innen.
Fig. 7C zeigt dasselbe Kaskadenelement wie Fig. 7A in einer isometrischen Ansicht von außen.
Fig. 7D zeigt dasselbe Kaskadenelement wie Fig. 7A in einer ersten Schnittansicht.
Fig. 7E zeigt dasselbe Kaskadenelement wie Fig. 7A in einer zweiten Schnittansicht.
Fig. 7F zeigt dasselbe Kaskadenelement wie Fig. 7A in einer dritten Schnittansicht.
Fig. 7G zeigt dasselbe Kaskadenelement wie Fig. 7A in einer vierten Schnittansicht.
Fig. 8A zeigt eine weitere bevorzugte Ausführungsform des erfindungsgemäßen Kaskadenelements von innen.
Fig. 8B zeigt dasselbe Kaskadenelement wie Fig. 8A in einer isometrischen Ansicht von innen.
Fig. 8C zeigt dasselbe Kaskadenelement wie Fig. 8A in einer isometrischen Ansicht von außen.
Fig. 8D zeigt dasselbe Kaskadenelement wie Fig. 8A in einer ersten Schnittansicht.
Fig. 8E zeigt dasselbe Kaskadenelement wie Fig. 8A in einer zweiten Schnittansicht.
Fig. 8F zeigt dasselbe Kaskadenelement wie Fig. 8A in einer dritten Schnittansicht.
Fig. 8G zeigt dasselbe Kaskadenelement wie Fig. 8A in einer vierten Schnittansicht.
Fig. 9 zeigt eine Anordnung von zwei im Wesentlichen gespiegelten Kaskadenelementen.
Fig. 10 zeigt eine Umlenkschaufel mit einer Ausbuchtung.
Fig. 11 zeigt eine Umlenkschaufel mit Leitrippen.
Fig. 12 zeigt eine Variante des Verfahrens zur additiven Herstellung des Kaskadenelements insbesondere mit verwobenen Verstärkungsfasern.

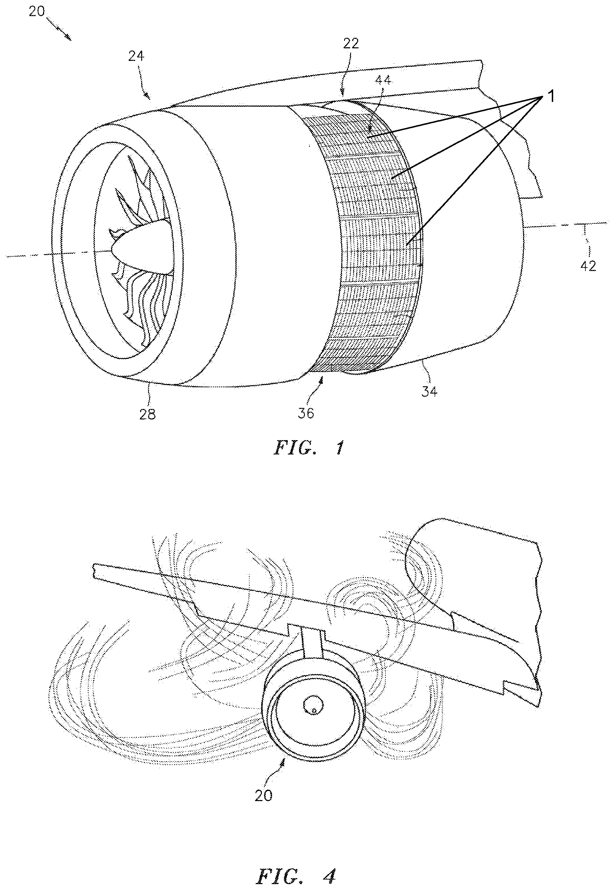

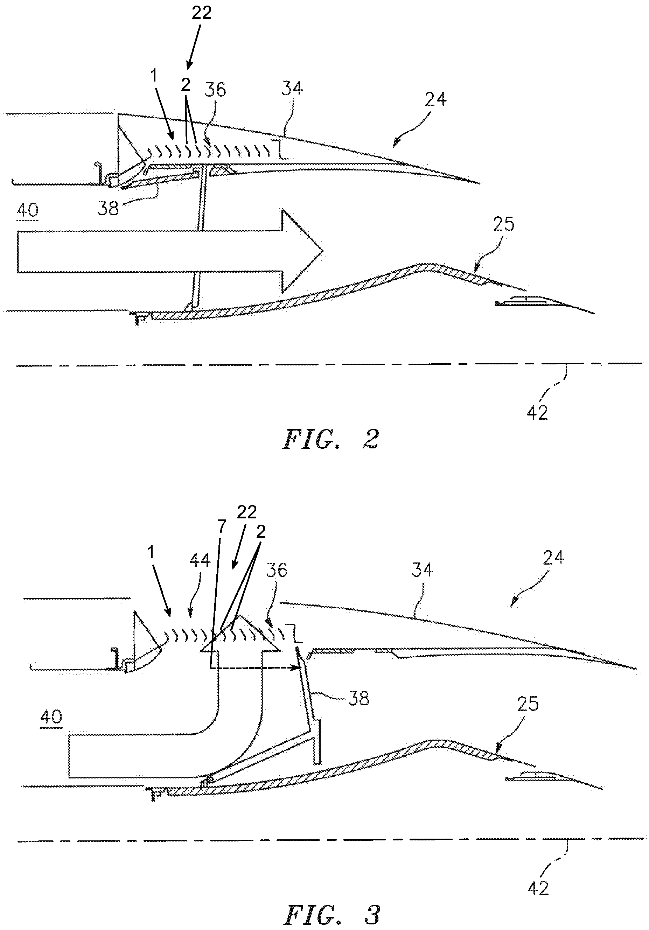

Fig. 1 bis 4 zeigen ein Triebwerk 20 mit einem Schubumkehrsystem 22 (vgl. US 2017/0057166 A1). Das Triebwerk weist eine äußere Triebwerksgondelstruktur 24 und eine innere Triebwerksgondelstruktur 25 (siehe Fig. 2 und 3) auf. Das Triebwerk 20 weist an seinem vorderen Ende einen Lufteinlass 28 auf. Das Schubumkehrsystem 22 umfasst eine Verschiebehülse 34 und eine Kaskadenanordnung 36, die eine Anzahl an Kaskadenelementen 1 aufweist. Das Schubkehrsystem 22 umfasst auch eine oder mehrere Blockierklappen 38, die dazu eingerichtet sind, Luft aus dem Schub-Strompfad 40 (insbesondere dem Triebwerksstrahl oder, im Falle eines Mantelstromtriebwerks, dem Neben-/Mantelstrompfad) des Triebwerks 20 während des Einsatzes der Schubumkehr zur Kaskadenanordnung 36 zu leiten bzw. den Schub-Strompfad 40 zu blockieren (siehe Fig. 2 und 3).

Die Verschiebehülse 34 ist entlang einer Längserstreckungsrichtung bzw. axialen Richtung 42 des Triebwerks 20 (eingezeichnet als Mittellinie des Triebwerks 20) verschiebbar, um die Kaskadenanordnung 36 freizulegen und einen Schubumkehrstrompfad 44 zu öffnen. Bei aktiviertem Schubumkehrsystem wird die Luftströmung von der Blockierklappe 38 vom Schub-Strompfad 40 in den Schubumkehrstrompfad 44 umgeleitet und anschließend von den Kaskadenelementen 1 weiter umgelenkt. Insbesondere wird der Luftstrom in eine radial nach außen und axial nach vorne gerichtete Richtung umgeleitet. Wie später noch beschrieben wird, kann mit den Kaskadenelementen 1 auch eine Umleitung der Luftströmung in Umfangsrichtung erfolgen, um bspw. die Luft von einer Landebahn und/oder Tragflächen wegzulenken (siehe Fig. 4). Bei der Deaktivierung des Schubkehrsystems 22 wird die Verschiebehülse 34 wieder entlang der axialen Richtung 42 nach vorne verschoben, um die Kaskadenanordnung 36 abzudecken und den Schubumkehrstrompfad 44 zu schließen. Die Kaskadenelemente 1 sind im Wesentlichen umfänglich um die axiale Mittellinie 42 angeordnet.

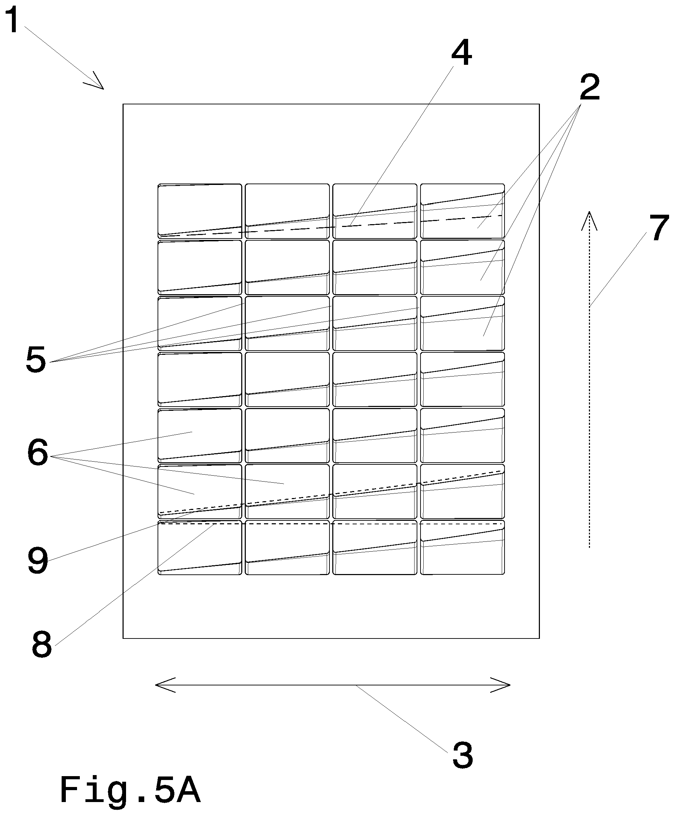

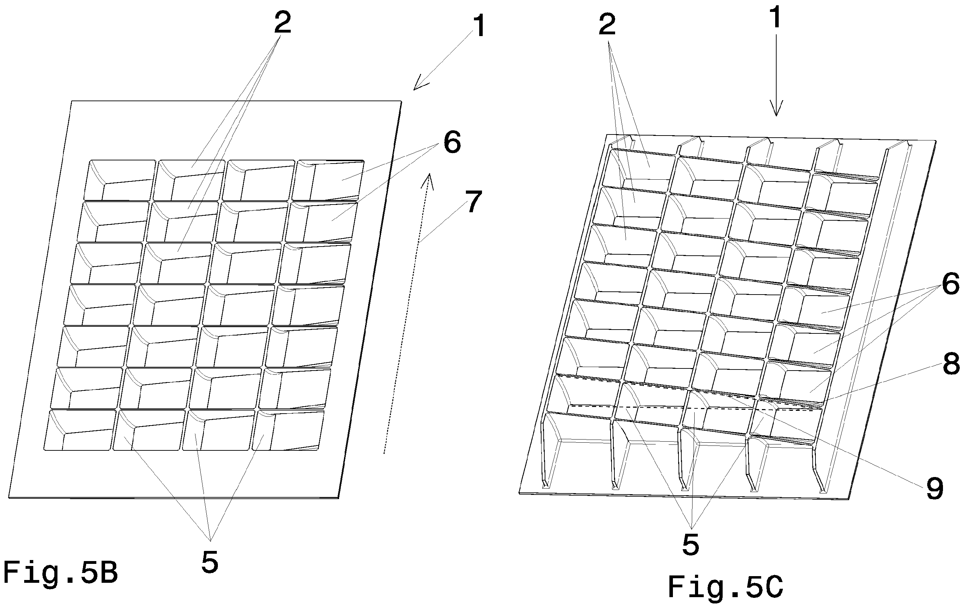

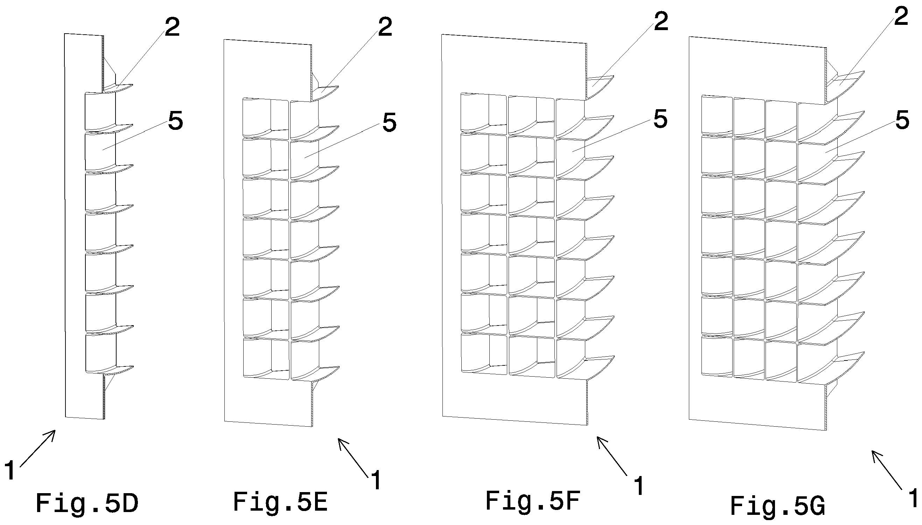

Die Fig. 5A bis 5G zeigen eine bevorzugte Ausführungsform des erfindungsgemäßen Kaskadenelements 1 für ein Schubumkehrsystem 22 eines Triebwerks 20. Fig. 5A und 5B zeigen das Kaskadenelement 1 von innen; Fig. 5C zeigt das Kaskadenelement 1 von außen. Die Begriffe "innen" und "außen" beziehen sich dabei auf innen bzw. außen im bestimmungsgemäß in einem Triebwerk 20 eingebauten Zustand des Kaskadenelements 1. Die Fig. 5D bis 5G sind dabei unterschiedliche Schnittansichten des Kaskadenelements 1. Das Kaskadenelement 1 weist eine Anzahl von nebeneinander angeordneten Umlenkschaufeln 2 zur Umlenkung eines Luftstroms auf. In der gezeigten Ausführungsform weist das Kaskadenelement 1 sechs ("reguläre") Umlenkschaufeln 2 und zwei (am Rand angeordnete) Umlenkschaufeln 2 und somit in Summe acht Umlenkschaufeln 2 auf, wobei selbstverständlich auch andere Anzahlen an Umlenkschaufeln 2 möglich sind. Die Umlenkschaufeln 2 sind entlang eines Verwindungs-Längsabschnitts 3, der in dieser Ausführungsform sich über die gesamte Länge der Umlenkschaufeln 2 erstreckt, um ihre jeweilige Längsachse 4 (von denen eine strichliert angedeutet ist) verwunden. Die Umlenkschaufeln 2 sind durch mehrere Stützwände 5 miteinander verbunden. In dieser Ausführungsform sind fünf Stützwände 5 vorgesehen, wobei jeweils zwei äußere Stützwände 5 gleichzeitig Außenwände bilden. Es können selbstverständlich auch andere Zahlen von Stützwänden 5 vorgesehen sein. Zwei benachbarte Umlenkschaufeln 2 und zwei benachbarte Stützwände bilden jeweils einen Fluidstrom-Umlenkkanal 6.

Die Umlenkschaufeln 2 können jeweils bezüglich einer Achse, die definiert wird durch eine Beabstandungsrichtung 7 der Anzahl von Umlenkschaufeln 2 voneinander, zur Anpassung an eine Mantelfläche bzw. einen Umfang (vgl. äußere Triebwerksgondelstruktur 24 in Fig. 1) eines Triebwerks 20 gekrümmt sein. In den Figuren 5A bis 8G ist diese Krümmung nicht dargestellt, sie ist jedoch in Fig. 1 sichtbar. Die Umlenkschaufeln 2 weisen einen gekrümmten Querschnitt auf. D.h., die Umlenkschaufeln 2 weisen eine Krümmung um ihre jeweilige Längsachse 4 auf. Durch diese Krümmung wird die Umlenkung der Luftströmung in eine Komponente in Vorwärts-Axialrichtung (d.h. in die dem Austrittsluftstrom für den Flugbetrieb entgegengesetzte Richtung) verstärkt.

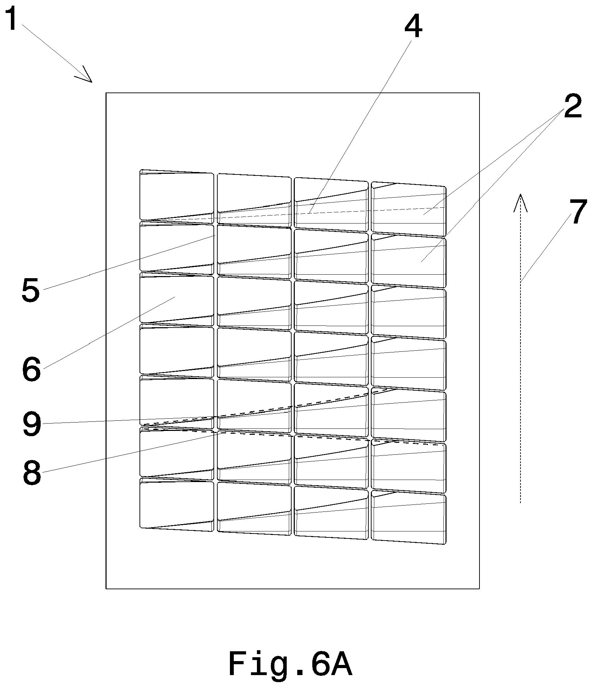

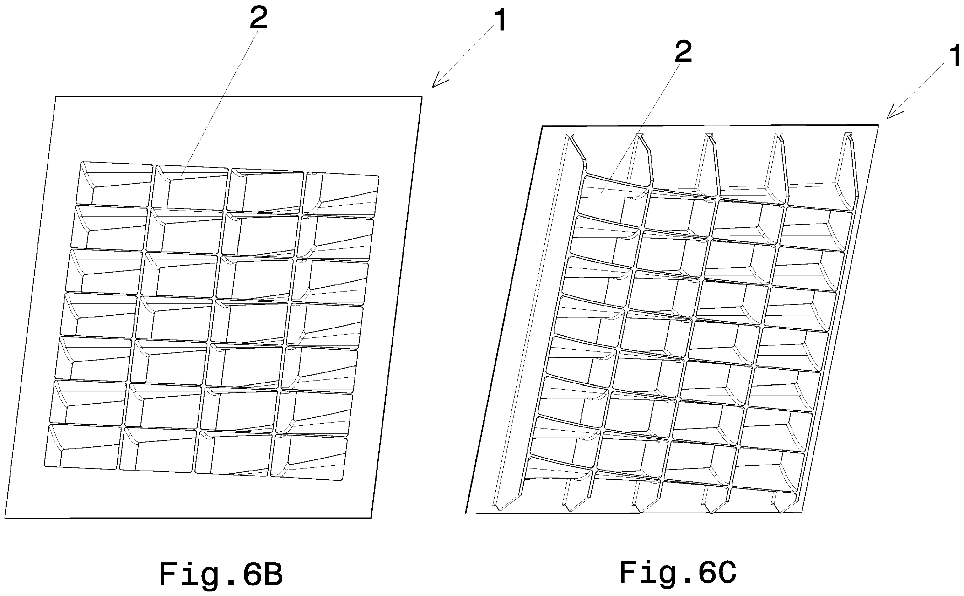

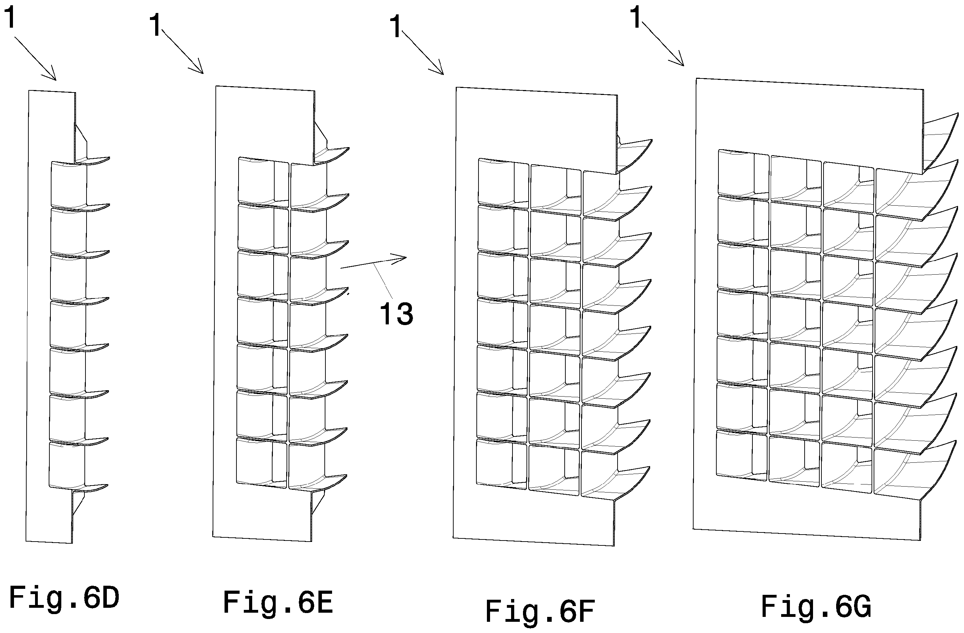

Die Fig. 6A bis 6G zeigen eine weitere bevorzugte Ausführungsform des Kaskadenelements 1. Diese Ausführungsform entspricht im Wesentlichen jener der Fig. 5A bis 5G, jedoch ist die Verwindung anders ausgeführt. Während bei der Ausführungsform der Fig. 5A bis 5G im Wesentlichen eine unterste (d.h. innerste) Längslinie 8 jeweils einer Umlenkschaufel 2 weiterhin entlang eines Umfangs des Triebwerks 20 verläuft, ist eine oberste (d.h. auf der Außenseite des Triebwerks 20 liegende Längslinie) Längslinie 9 gegenüber einer umfänglich verlaufenden Linie des Triebwerks 20 geneigt. Bei der Ausführungsform der Fig. 6A bis 6G ist die unterste Längslinie 8 jeweils der Umlenkschaufels 2 in die eine Richtung gegenüber einer umfänglichen Linie des Triebwerks 20 geneigt und eine oberste Längslinie 9 jeweils der Umlenkschaufeln 2 in die andere Richtung geneigt. Die Umlenkschaufeln 2 der Ausführungsform der Fig. 6A bis 6G weisen eine stärkere Verwindung auf als jene der Fig. 5A bis 5G, wobei in beiden Fällen der Verwindungs-Längsabschnitt 3 sich über die gesamte Längserstreckung der Umlenkschaufeln 2 erstreckt. Die Tiefenerstreckungsrichtung 13 ist in Fig. 6E eingezeichnet.

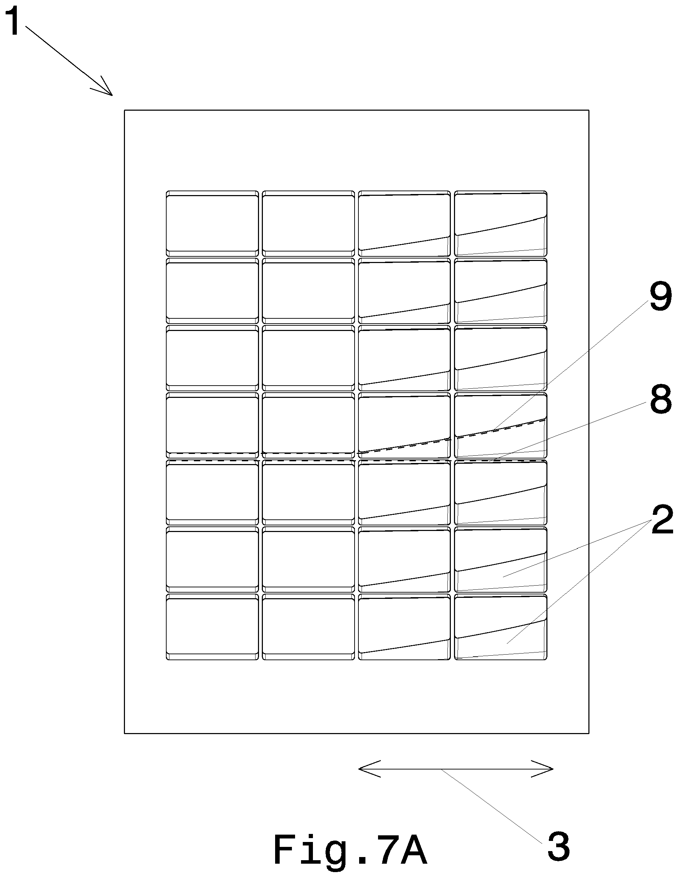

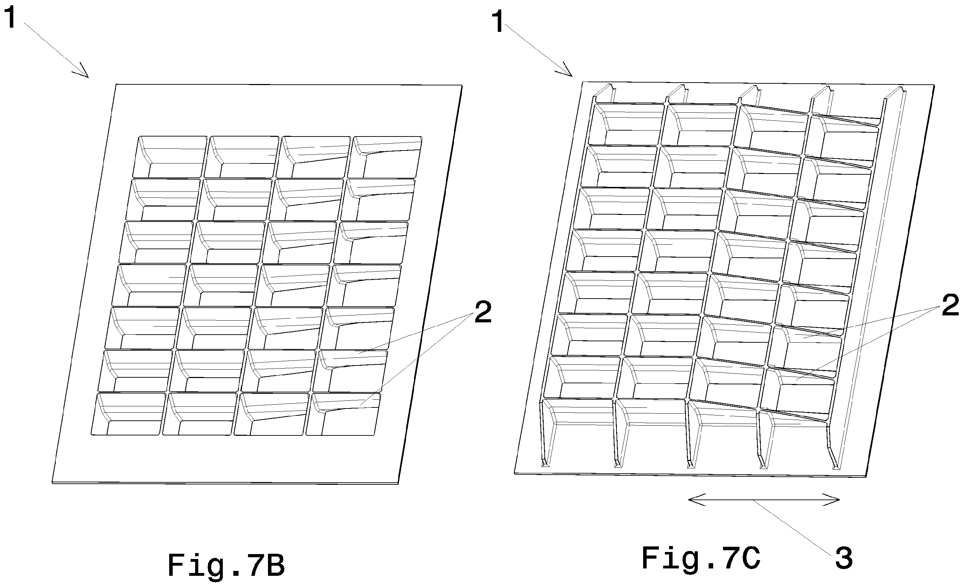

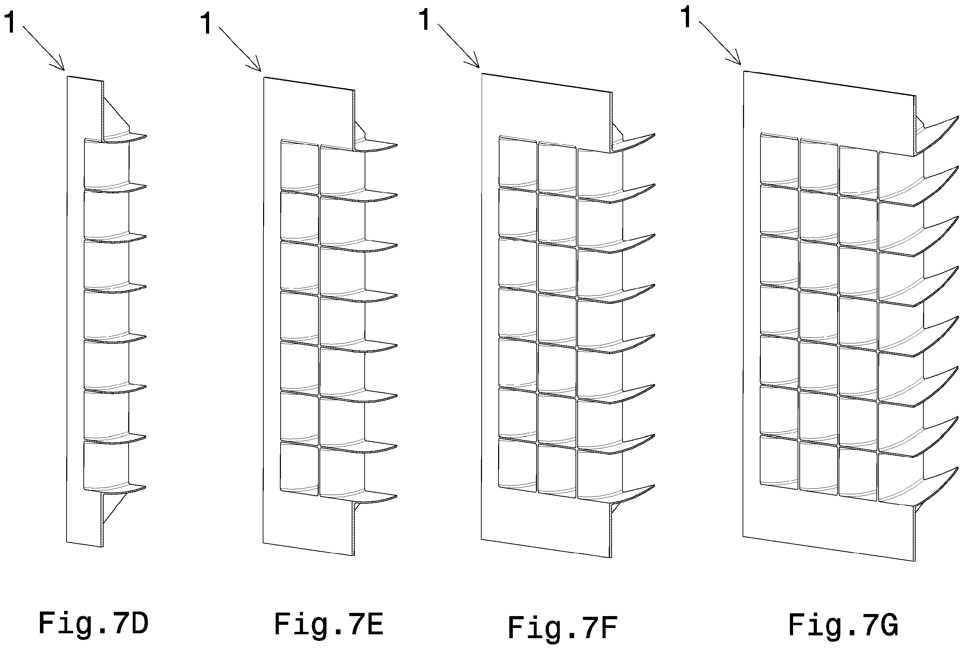

Die in den Fig. 7A bis 7G gezeigte Ausführungsform entspricht im Wesentlichen der in den Fig. 5A bis 5G gezeigten. Im Unterschied zu letzterer erstreckt sich der Verwindungs-Längsabschnitt 3 allerdings nur über ungefähr die Hälfte der Längserstreckung jeder Umlenkschaufel 2. D.h., die Umlenkschaufeln 2 weisen nur über Teilbereich ihrer Länge eine Verwindung auf. D.h., die Längslinie 8, 9 der Umlenkschaufeln sind in einem ersten Abschnitt (in Fig. 7A, 7B auf der linken Seite) parallel zueinander und weisen in einem daran anschließenden Abschnitt (in Fig. 7A, 7B auf der rechten Seite) eine Verwindung auf und sind winkelschief zueinander. Somit kann die Umlenkung der Luft genauer gesteuert werden. Selbstverständlich können unterschiedliche Umlenkschaufeln 2 eines Kaskadenelements 1 unterschiedliche Verwindungen (bspw. unterschiedliche Verwindungswinkel) und unterschiedliche Verwindungs-Längsabschnitte 3 aufweisen. Es kann auch nur eine Umlenkschaufel 2 oder nur ein Teil der Umlenkschaufeln 2 eine (ggf. unterschiedliche) Verwindung aufweisen.

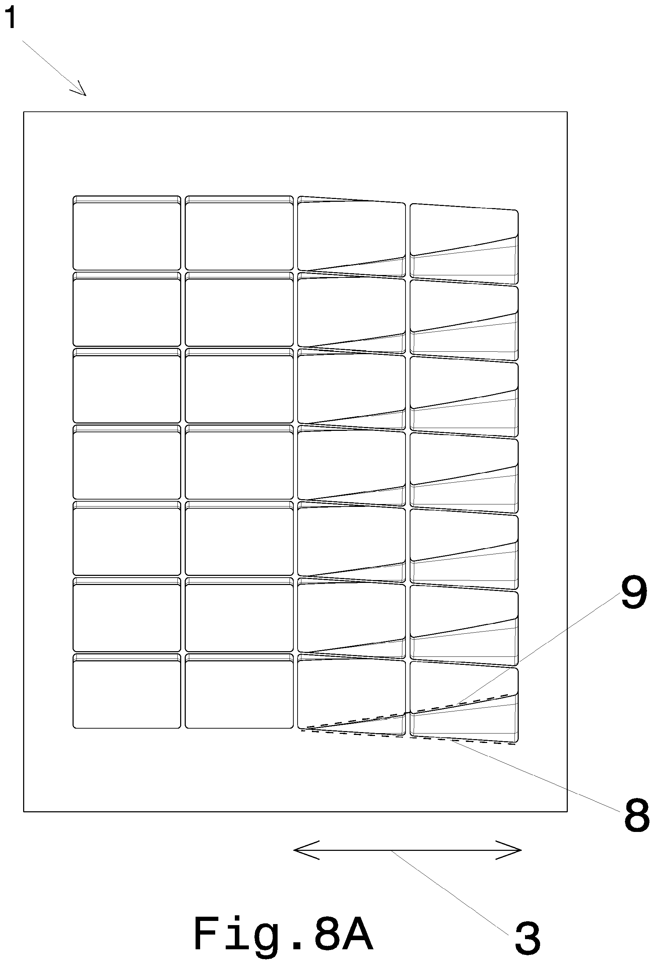

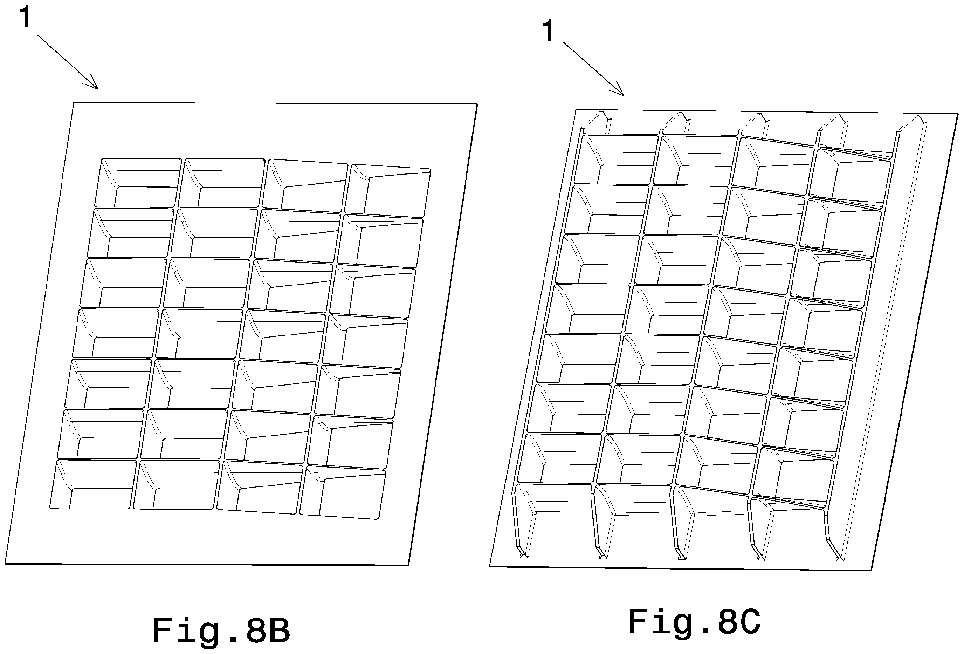

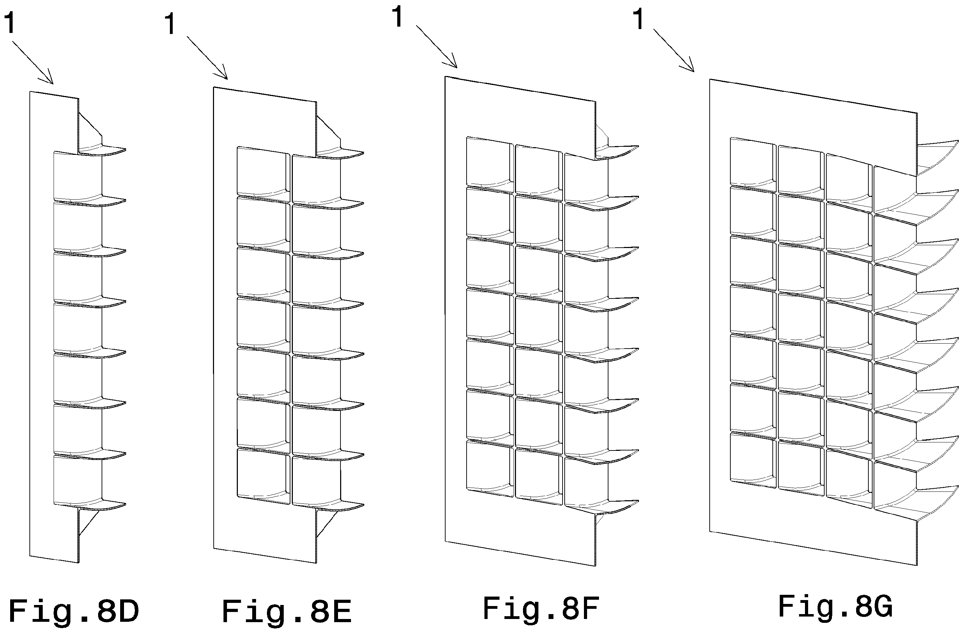

Die in den Fig. 8A bis 8G gezeigte Ausführungsform unterscheidet sich von der in den Fig. 7A bis 7G gezeigten Ausführungsform durch den Verlauf der untersten Längslinie 8 und obersten Längslinie 9, vergleichbar mit dem Unterschied zwischen den Ausführungsformen der Fig. 5A bis 5G und 6A bis 6G. Dabei verlaufen die Linien 8, 9 wiederum in einem ersten Abschnitt parallel und in einem zweiten Abschnitt winkelig.

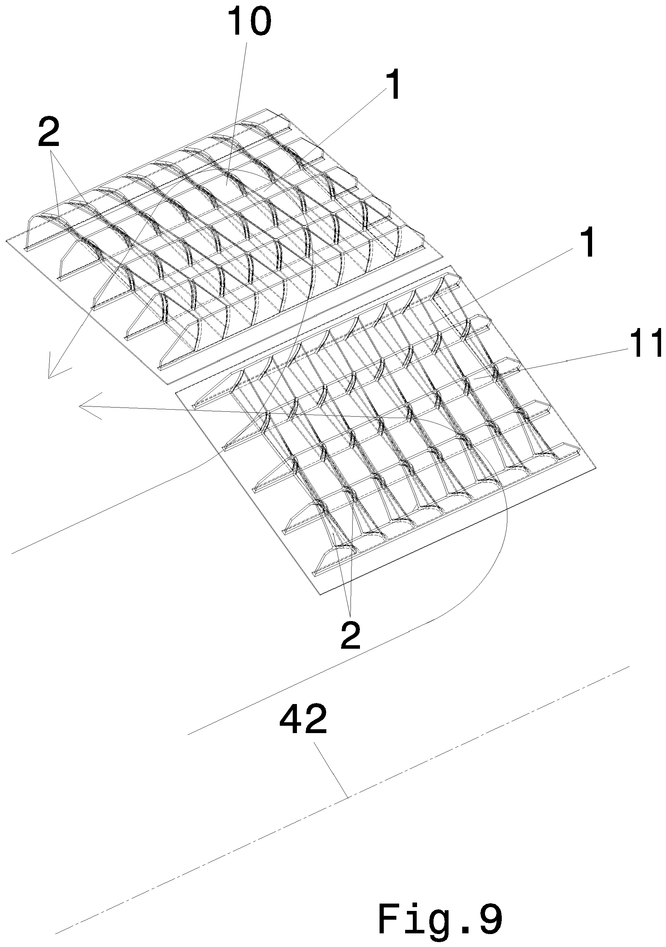

Fig. 9 zeigt eine Anordnung von zwei Kaskadenelementen 1, nämlich einem ersten Kaskadenelement 10 und einem zweiten Kaskadenelement 11. Eine derartige Anordnung kann bspw. in dem Schubumkehrsystem 22 eines Triebwerks 20 vorgesehen sein. Das erste Kaskadenelement 10 und das zweite Kaskadenelement 11 sind insbesondere umfänglich an einem Triebwerk 20 angeordnet, d.h. in radialer Richtung bezogen auf eine Triebwerksachse 42 nebeneinander angeordnet. Die Umlenkschaufeln 2 des ersten Kaskadenelements 10 sind um eine jeweilige Längsachse dieser Umlenkschaufel 2 in eine erste Winkelrichtung verwunden und die Umlenkschaufeln 2 des zweiten Kaskadenelements 11 sind um eine jeweilige Längsachse in eine der ersten Winkelrichtung entgegengesetzten zweiten Winkelrichtung verwunden. Hierdurch kann ein Umkehrschub-Luftstrom, wie durch die beiden Pfeile angedeutet gebündelt werden.

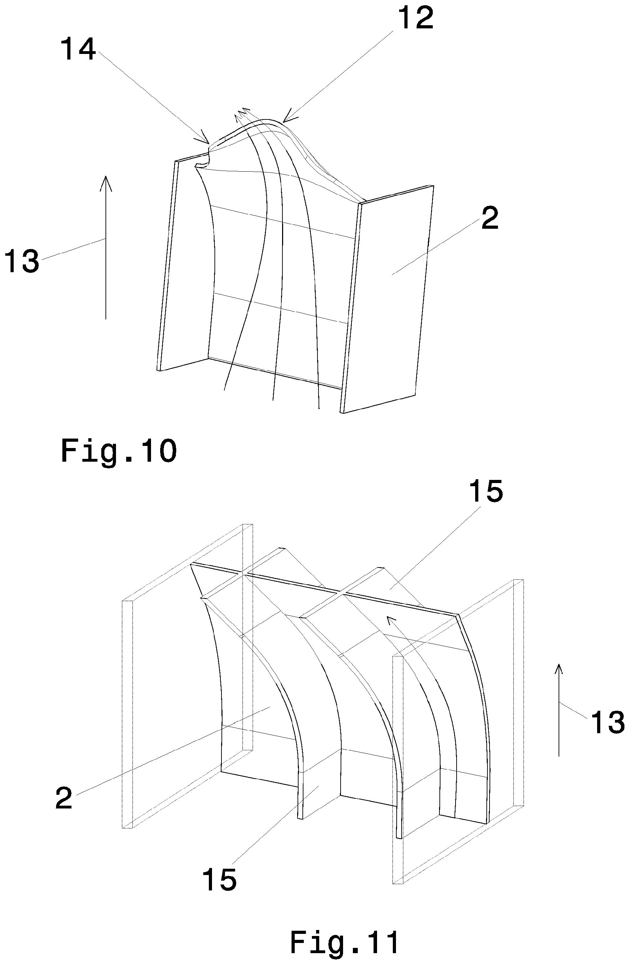

Fig. 10 zeigt eine Ausführungsform einer Umlenkschaufel 2, die an einer die Umlenkschaufel 2 in Tiefenerstreckungsrichtung 13 begrenzenden Kante 14 eine Ausbuchtung 12 aufweist. Somit weicht der Verlauf der Kante 14 von einer Geraden bzw. in dem Verwindungs-Längsabschnitt 3 von einer Helix ab. Die Umlenkschaufel 2 ist im Bereich der Ausbuchtung 12 als Teilschale ausgebildet. Die Pfeile deuten eine Umlenkung und Bündelung des Luftstroms an. Dabei ist die Umlenkschaufel 2 derart ausgebildet, dass eine an der Umlenkschaufel 2 vorbeiströmende Fluidströmung in Richtung einer zentralen Linie der Ausbuchtung 12 umgelenkt wird. Dadurch kann die durch den Fluidstrom-Umlenkkanal 6 strömende Luft stärker in Richtung der Längsachse 4 des Kaskadenelements 1 abgelenkt bzw. gebündelt werden. Insbesondere im bestimmungsgemäß in einem Triebwerk 20 eines Flugzeugs eingebauten Zustands kann dadurch die Umlenkung des Luftstroms entgegen der Flugrichtung verstärkt werden, womit eine Erhöhung der Bremswirkung erzielt werden kann.

Fig. 11 zeigt eine weitere Ausführungsform einer Umlenkschaufel 2. An der Umlenkschaufel 2 sind Leitrippen 15 vorgesehen, die im Wesentlichen in die Tiefenerstreckungsrichtung 13 der Umlenkschaufel 2 laufen. In dieser Ausführungsform sind die Leitrippen 15 an beiden Seiten der Umlenkschaufel 2 vorgesehen. Selbstverständlich können diese auch nur auf einer Seite vorgesehen sein. In dieser Ausführungsform sind zwei Leitrippen pro Seite vorgesehen, selbstverständlich sind auch andere Zahlen an Leitrippen 15 möglich.

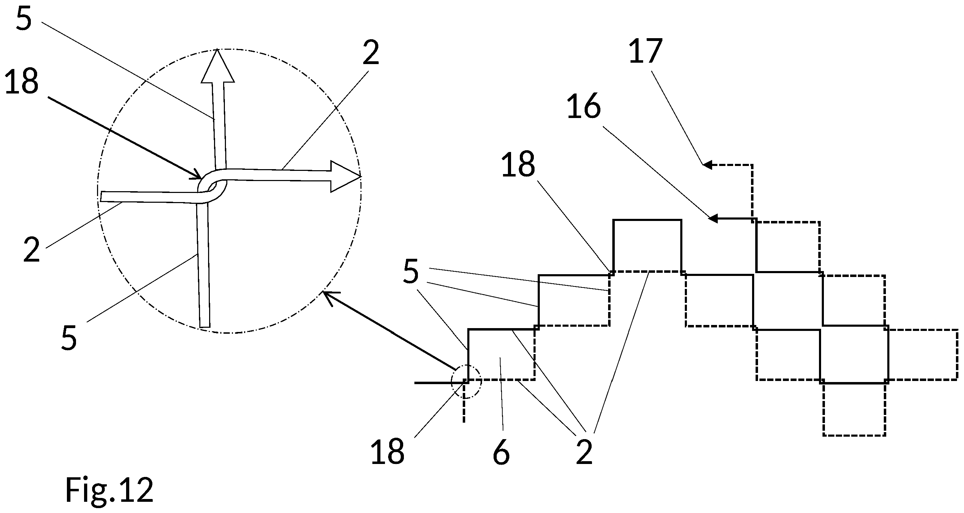

Fig. 12 veranschaulicht die additive Herstellung einer Anzahl von nebeneinander angeordneten Umlenkschaufeln 2 und von Stützwänden 5, wobei jeweils zwei benachbarte Umlenkschaufeln 2 und zwei benachbarte Stützwände 5 einen Fluidstrom-Umlenkkanal 6 bilden. Dabei erfolgt die additive Herstellung mit einem ersten Druckkopf 16 und einem zweiten Druckkopf 17 (stilisiert als Pfeile), wobei mit dem ersten Druckkopf 16 zumindest eine Stützwand 5 und eine Umlenkschaufel 2, die einen bestimmten Fluidstrom-Umlenkkanal 6 begrenzen, hergestellt wird, und mit dem zweiten Druckkopf 17 zumindest eine weitere Stützwand 5 und eine weitere Umlenkschaufel 2, die den bestimmten Fluidstrom-Umlenckanal 6 begrenzen, hergestellt wird, wobei zur additiven Herstellung verwendete Fasern des ersten Druckkopfs 16 und des zweiten Druckkopfs 17 zumindest an einem Eck 18 des bestimmten Fluidstrom-Umlenkkanals 6 verwebend gekreuzt werden. Insbesondere werden auch weitere Fluidstrom-Umlenkkanäle 6 gleichermaßen additiv hergestellt. Vorteilhafterweise wird in einem ersten Durchgang vom ersten und vom zweiten Druckkopf 16, 17 jeweils eine Schicht aufgetragen. In zumindest einem zweiten Durchgang wird jeweils eine weitere Schicht (insbesondere nach einem neuen Muster) aufgetragen, sodass zumindest eine, vorzugsweise jede, Umlenkschaufel 2 und zumindest eine, vorzugsweise jede, Stützwand 5 Schichten von dem ersten und dem zweiten Druckkopf 16, 17 enthält. D.h. für die zweite Schicht werden die Druckköpfe 16, 17 bevorzugt vertauscht geführt, d.h. der erste Druckkopf 16 druckt eine zweite Schicht auf eine ersten, vom zweiten Drucckopf 17 hergestellte Schicht, und umgekehrt. Hierdurch kann die Stabilität des Kaskadenelements 1 verbessert werden.

## Patentansprüche

1. Kaskadenelement (1) für ein Schubumkehrsystem (22) eines Triebwerks (20), insbesondere eines Strahltriebwerks, aufweisend:
eine Anzahl von nebeneinander angeordneten Umlenkschaufeln (2) zur Umlenkung eines Luftstroms,
**dadurch gekennzeichnet, dass**
zumindest eine der Umlenkschaufeln (2) zumindest entlang eines Verwindungs-Längsabschnitts (3) um ihre Längsachse (4) verwunden ist.

2. Kaskadenelement (1) nach Anspruch 1, **dadurch gekennzeichnet, dass** die nebeneinander angeordneten Umlenkschaufeln (2) durch zumindest zwei Stützwände (5) miteinander verbunden sind, wobei jeweils zwei benachbarte Umlenkschaufeln (2) und zwei Stützwände (5) einen Fluidstrom-Umlenkkanal (6) bilden.

3. Kaskadenelement (1) nach einem der vorhergehenden Ansprüche, **dadurch gekennzeichnet, dass** die Umlenkschaufeln (2) bezüglich einer Achse, die definiert wird durch eine Beabstandungsrichtung (7) der Anzahl von Umlenkschaufeln (2) voneinander, zur Anpassung an eine Mantelfläche einer Triebwerksgondel (24) gekrümmt sind.

4. Kaskadenelement (1) nach einem der vorhergehenden Ansprüche, **dadurch gekennzeichnet, dass** zumindest eine Umlenkschaufel (2) einen gekrümmten Querschnitt aufweist.

5. Kaskadenelement (1) nach einem der vorhergehenden Ansprüche, **dadurch gekennzeichnet, dass** zumindest eine Umlenkschaufel (2) an einer die Umlenkschaufel (2) in Tiefenerstreckungsrichtung (13) begrenzenden Kante (14) eine Ausbuchtung (12) aufweist, sodass der Verlauf der Kante (14) von einer Geraden bzw. in dem Verwindungs-Längsabschnitt (3) von einer Helix abweicht.

6. Kaskadenelement (1) nach Anspruch 5, **dadurch gekennzeichnet, dass** die zumindest eine Umlenkschaufel (2) im Bereich der Ausbuchtung (12) konkav ausgebildet ist.

7. Kaskadenelement (1) nach einem der Ansprüche 5 oder 6, **dadurch gekennzeichnet, dass** die Umlenkschaufel (2) derart ausgebildet ist, dass eine an der Umlenkschaufel (2) vorbeiströmende Fluidströmung in Richtung einer zentralen Linie der Ausbuchtung (12) umgelenkt und/oder gebündelt wird.

8. Kaskadenelement (1) nach einem der vorhergehenden Ansprüche, **dadurch gekennzeichnet, dass** an zumindest einer Umlenkschaufel (2) zumindest eine Leitrippe (15) vorgesehen ist.

9. Kaskadenelement (1) nach einem der vorhergehenden Ansprüche, **dadurch gekennzeichnet, dass** zumindest eine Umlenkschaufel (2) eine sich in Tiefenerstreckungsrichtung (13) verändernde Wandstärke aufweist, wobei die Wandstärke insbesondere in Richtung einer Luftstrom-Ausstoßrichtung eines Schubumkehrsystems (22) abnehmend ist oder die Wandstärke von einer Längslinie in beide Richtungen der Tiefenerstreckung (13) abnehmend ist.

10. Triebwerk (20) mit einem Schubumkehrsystem (22), **dadurch gekennzeichnet, dass** das Schubumkehrsystem (22) zumindest ein Kaskadenelement (1) nach einem der vorhergehenden Ansprüche aufweist.

11. Triebwerk (20) nach Anspruch 10, **dadurch gekennzeichnet, dass** das Schubumkehrsystem zumindest ein erstes und ein zweites Kaskadenelement (10, 11) jeweils nach einem der Ansprüche 1 bis 9 aufweist, wobei das erste und das zweite Kaskadenelement (10, 11) in Umfangsrichtung bezogen auf eine Triebwerksachse (42) nebeneinander angeordnet sind, wobei zumindest eine der Umlenkschaufeln (2) des ersten Kaskadenelements (10) um eine Längsachse (4) dieser Umlenkschaufel (2) zumindest entlang des Verwindungs-Längsabschnitts (3) in eine erste Winkelrichtung verwunden ist und zumindest eine der Umlenkschaufeln (2) des zweiten Kaskadenelements (11) um eine Längsachse (4) dieser Umlenkschaufel (2) zumindest entlang des Verwindungs-Längsabschnitts (3) in eine der ersten Winkelrichtung entgegengesetzten zweiten Winkelrichtung verwunden ist.

12. Verfahren zur Herstellung eines Kaskadenelements (1) für ein Schubumkehrsystem (22) eines Triebwerks (20), insbesondere eines Strahltriebwerks, aufweisend die Schritte:
- additive Herstellung einer Anzahl von nebeneinander angeordneten Umlenkschaufeln (2) zur Umlenkung eines Luftstroms, wobei zumindest eine der Umlenkschaufeln (2) entlang eines Verwindungs-Längsabschnitts (3) mit einer Verwindung bezüglich ihrer Längsachse (4) ausgebildet wird.

13. Verfahren nach Anspruch 12, **dadurch gekennzeichnet, dass** der Schritt der additiven Herstellung der Anzahl von nebeneinander angeordneten Umlenkschaufeln (2) weiters umfasst:
- Versehen zumindest einer der Umlenkschaufeln (2) an zumindest einem Seitenflächenabschnitt mit einer Riblet-Oberfläche.

14. Verfahren nach einem der Ansprüche 12 oder 13, **dadurch gekennzeichnet, dass** das Verfahren weiters den Schritt umfasst:
- additive Herstellung von zumindest zwei Stützwänden (5), mit denen nebeneinander angeordnete Umlenkschaufeln (2) miteinander verbunden werden, wobei jeweils zwei benachbarte Umlenkschaufeln (2) und zwei Stützwände (5) einen Fluidstrom-Umlenkkanal (6) bilden.

15. Verfahren nach Anspruch 14, **dadurch gekennzeichnet, dass** die additive Herstellung der Anzahl von nebeneinander angeordneten Umlenkschaufeln (2) und die additive Herstellung von zumindest zwei Stützwänden (5) mit zumindest einem ersten und einem zweiten Druckkopf (16, 17) erfolgt, wobei mit dem ersten Druckkopf (16) zumindest eine Stützwand (5) und eine Umlenkschaufel (2), die einen bestimmten Fluidstrom-Umlenkkanal (6) begrenzen, hergestellt werden, und mit dem zweiten Druckkopf (17) zumindest eine weitere Stützwand (5) und eine weitere Umlenkschaufel (2), die den bestimmten Fluidstrom-Umlenkkanal (6) begrenzen, hergestellt werden, wobei zur additiven Herstellung verwendete Fasern des ersten Druckkopfs (16) und des zweiten Druckkopfs (17) zumindest an einem Eck (18) des bestimmten Fluidstrom-Umlenkkanals (6) verwebend gekreuzt werden,
wobei vorzugsweise die Stützwand (5), die Umlenkschaufel (2), die weitere Stützwand (5) und die weitere Umlenkschaufel (2), die den bestimmten Fluidstrom-Umlenkkanal (6) begrenzen, jeweils zwei Schichten aufweisen, wobei die Herstellung einer der zwei Schichten mit dem ersten Druckkopf (16) erfolgt und die Herstellung der anderen der zwei Schichten mit dem zweiten Druckkopf (17) erfolgt.

## Claims

1. A cascade element (1) for a thrust reverser system (22) of an engine (20), particularly a jet engine, comprising:
a number of adjacently arranged deflecting blades (2) for deflecting an airflow,
**characterized in that**
at least one of the deflecting blades (2) is twisted about its longitudinal axis (4) at least along a twisting longitudinal section (3).

2. The cascade element (1) according to Claim 1, **characterized in that** the adjacently arranged deflecting blades (2) are connected to one another by at least two supporting walls (5), wherein in each case, two adjacent deflecting blades (2) and two supporting walls (5) form a fluid flow deflection channel (6).

3. The cascade element (1) according to one of the preceding claims, **characterized in that** the deflecting blades (2) are curved with respect to an axis, which is defined by a spacing direction (7) of the number of deflecting blades (2) from one another, to adapt to a lateral surface of an engine nacelle (24) .

4. The cascade element (1) according to one of the preceding claims, **characterized in that** at least one deflecting blade (2) comprises a curved cross section.

5. The cascade element (1) according to one of the preceding claims, **characterized in that** at least one deflecting blade (2) comprises a bulge (12) on an edge (14) delimiting the deflecting blade (2) in the direction of downward extent (13), so that the shape of the edge (14) deviates from a straight line or, in the twisting longitudinal section (3), from a helix.

6. The cascade element (1) according to Claim 5, **characterized in that** the at least one deflecting blade (2) is designed to be concave in the region of the bulge (12).

7. The cascade element (1) according to one of Claims 5 or 6, **characterized in that** the deflecting blade (2) is designed in such a manner that a fluid flow flowing past the deflecting blade (2) is deflected and/or bundled in the direction of a central line of the bulge (12).

8. The cascade element (1) according to one of the preceding claims, **characterized in that** at least one guiding rib (15) is provided on at least one deflecting blade (2).

9. The cascade element (1) according to one of the preceding claims, **characterized in that** at least one deflecting blade (2) comprises a wall thickness which changes in the direction of downward extent (13), wherein the wall thickness in particular decreases in the direction of an airflow discharge direction of a thrust reverser system (22) or the wall thickness decreases from a longitudinal line in both directions of the downward extent (13).

10. An engine (20) having a thrust reverser system (22), **characterized in that** the thrust reverser system (22) comprises at least one cascade element (1) according to one of the preceding claims.

11. The engine (20) according to Claim 10, **characterized in that** the thrust reverser system comprises at least one first and one second cascade element (10, 11) in each case according to one of Claims 1 to 9, wherein the first and the second cascade element (10, 11) in the circumferential direction with respect to an engine axis (42) are arranged adjacently, wherein at least one of the deflecting blades (2) of the first cascade element (10) is twisted in a first angular direction about a longitudinal axis (4) of the same deflecting blade (2) at least along the twisting longitudinal section (3), and at least one of the deflecting blades (2) of the second cascade element (11) is twisted in a second angular direction, which is opposite to the first angular direction, about a longitudinal axis (4) of the same deflecting blade (2) at least along the twisting longitudinal section (3).

12. A method for producing a cascade element (1) for a thrust reverser system (22) of an engine (20), particularly a jet engine, comprising the steps:
- additive production of a number of adjacently arranged deflecting blades (2) for deflecting an airflow, wherein at least one of the deflecting blades (2) is constructed with a twist with respect to its longitudinal axis (4) along a twisting longitudinal section (3).

13. The method according to Claim 12, **characterized in that** the step of additive production of the number of adjacently arranged deflecting blades (2) further comprises:
- the provision of a riblet surface on at least one side surface section of at least one of the deflecting blades (2).

14. The method according to one of Claims 12 or 13, **characterized in that** the method further comprises the step:
- additive production of at least two supporting walls (5), using which adjacently arranged deflecting blades (2) are connected to one another, wherein in each case two adjacent deflecting blades (2) and two supporting walls (5) form a fluid flow deflection channel (6).

15. The method according to Claim 14, **characterized in that** the additive production of the number of adjacently arranged deflecting blades (2) and the additive production of at least two supporting walls (5) takes place using at least one first and one second print head (16, 17), wherein at least one supporting wall (5) and one deflecting blade (2), which delimit a certain fluid flow deflection channel (6), are produced using the first print head (16), and at least one further supporting wall (5) and one further deflecting blade (2), which delimit the certain fluid flow deflection channel (6), are produced using the second print head (17), wherein fibres used for additive production from the first print head (16) and from the second print head (17) are criss-crossed in an interwoven manner at least at one corner (18) of the certain fluid flow deflection channel (6), whereby preferably the supporting wall (5), the deflecting blade (2), the further supporting wall (5) and the further deflecting blade (2), which delimit the certain fluid flow deflection channel (6), in each case comprise two layers, wherein the production of one of the two layers takes place using the first print head (16) and the production of the other of the two layers takes place using the second print head (17).

## Revendications

1. Élément en cascade (1) pour un système d'inversion de poussée (22) d'un moteur (20), plus particulièrement d'un moteur à réaction, comprenant :
plusieurs aubes déflectrices juxtaposées (2) pour la déflexion d'un flux d'air,
**caractérisé en ce que**
au moins une des aubes déflectrices (2) est vrillée au moins le long d'une portion de longueur de vrillage (3) autour de son axe longitudinal (4).

2. Élément en cascade (1) selon la revendication 1, **caractérisé en ce que** les aubes déflectrices juxtaposées (2) sont reliées entre elles par au moins deux parois d'appui (5), dans lequel, respectivement, deux aubes déflectrices (2) adjacentes et deux parois d'appui (5) forment un canal de déflexion de flux de fluide (6).

3. Élément en cascade (1) selon l'une des revendications précédentes, **caractérisé en ce que** les aubes déflectrices (2) sont incurvées par rapport à un axe, qui est défini par une direction d'espacement (7) des plusieurs aubes déflectrices (2) entre elles, pour une adaptation à une surface d'enveloppe d'une nacelle de moteur (24).

4. Élément en cascade (1) selon l'une des revendications précédentes, **caractérisé en ce qu'**au moins une aube déflectrice (2) présente une section transversale incurvée.

5. Élément en cascade (1) selon l'une des revendications précédentes, **caractérisé en ce qu'**au moins une aube déflectrice (2) présente, au niveau d'une arête (14) limitant l'aube déflectrice (2) dans la direction de l'extension en profondeur (13), une protubérance (12) de sorte que le tracé de l'arête (14) s'écarte d'une droite ou, dans la portion longitudinale de vrillage (3), d'une hélice.

6. Élément en cascade (1) selon la revendication 1, **caractérisé en ce que** l'au moins une aube déflectrice (2) est réalisée de manière concave au niveau de la protubérance (12).

7. Élément en cascade (1) selon l'une des revendications 5 ou 6, **caractérisé en ce que** l'aube déflectrice (2) est conçue de sorte qu'un écoulement de fluide passant au niveau de l'aube déflectrice (2) est déviée et/ou focalisée en direction d'une ligne centrale de la protubérance (12).

8. Élément en cascade (1) selon l'une des revendications précédentes, **caractérisé en ce que**, sur au moins une aube déflectrice (2), est prévue au moins une nervure de guidage (15).

9. Élément en cascade (1) selon l'une des revendications précédentes, **caractérisé en ce qu'**au moins une aube déflectrice (2) présente une épaisseur de paroi variable dans la direction d'extension en profondeur (13), dans lequel l'épaisseur de paroi diminue plus particulièrement dans la direction d'éjection du flux d'air d'un système d'inversion de poussée (22) ou l'épaisseur de paroi diminue à partir d'une ligne longitudinale dans les deux directions de l'extension en profondeur (13).

10. Moteur (20) avec un système d'inversion de poussée (22), **caractérisé en ce que** le système d'inversion de poussée (22) comprend au moins un élément en cascade (1) selon l'une des revendications précédentes.

11. Moteur (20) selon la revendication 10, **caractérisé en ce que** le système d'inversion de poussée comprend au moins un premier et un deuxième élément en cascade (10, 11) respectivement selon l'une des revendications 1 à 9, dans lequel les premier et deuxième éléments en cascade (10, 11) sont juxtaposés dans une direction circonférentielle par rapport à un axe de moteur (42), dans lequel au moins une des aubes déflectrices (2) du premier élément en cascade (10) est vrillée autour d'un axe longitudinal (4) de cette aube déflectrice (2), au moins le long de la portion longitudinale de vrillage (3), dans une première direction angulaire et au moins une des aubes déflectrices (2) du deuxième élément en cascade (11) est vrillée autour d'un axe longitudinal (4) de cette aube déflectrice (2), au moins le long de la portion longitudinale de vrillage (3), dans une deuxième direction angulaire opposée à la première direction angulaire.

12. Procédé de fabrication d'un élément en cascade (1) pour un système d'inversion de poussée (22) d'un moteur (20), plus particulièrement d'un moteur à réaction, comprenant les étapes suivantes :
- fabrication additive de plusieurs aubes déflectrices juxtaposées (2) pour la déflexion d'un flux d'air, dans lequel au moins une des aubes déflectrices (2) est réalisée le long d'une portion longitudinale de vrillage (3) avec un vrillage le long de son axe longitudinal (4).

13. Procédé selon la revendication 12, **caractérisé en ce que** l'étape de fabrication additive des plusieurs aubes déflectrices juxtaposées (2) comprend en outre :
- l'équipement d'au moins une des aubes déflectrices (2), sur au moins une portion de surface latérale, d'une surface à riblets.

14. Procédé selon l'une des revendications 12 ou 13, **caractérisé en ce que** le procédé comprenant en outre l'étape suivante :
- fabrication additive d'au moins deux parois d'appui (5), avec lesquelles des aubes déflectrices juxtaposées (2) sont reliées entre elles, dans lequel, respectivement, deux aubes déflectrices (2) adjacentes et deux parois d'appui (5) constituent un canal de déflexion de flux de fluide (6).

15. Procédé selon la revendication 14, **caractérisé en ce que** la fabrication additive des plusieurs aubes déflectrices juxtaposées (2) et la fabrication additive d'au moins deux parois d'appui (5) a lieu avec au moins une première et une deuxième têtes d'impression (16, 17), dans lequel, avec la première tête d'impression (16), au moins une paroi d'appui (5) et une aube déflectrice (2), qui délimitent un canal de déflexion de flux de fluide (6) déterminé, sont fabriquées et, avec la deuxième tête d'impression (17), au moins une autre paroi d'appui (5) et une autre aube déflectrice (2), qui délimitent le canal de déflexion de flux de fluide (6) déterminé, sont fabriquées, dans lequel les fibres, utilisées pour la fabrication additive, de la première tête d'impression (16) et de la deuxième tête d'impression (17) sont croisées à la manière d'un tissage au moins au niveau d'un angle (18) du canal de déflexion de flux de fluide (6),
dans lequel, de préférence, la paroi d'appui (5), l'aube déflectrice (2), l'autre paroi d'appui (5) et l'autre aube déflectrice (2), qui délimitent le canal de déflexion de flux de fluide (6) déterminé, présentent chacune deux couches, dans lequel la fabrication d'une des deux couches a lieu avec la première tête d'impression (16) et la fabrication de l'autre des deux couches a lieu avec la deuxième tête d'impression (17).
